# EUROPEAN PATENT APPLICATION

(11) **EP 4 852 563 A1**
(43) Date of publication of application: **09.12.2026**
(21) Application number: 25747665.5
(22) Date of filing: 21.01.2025
(51) Int. Cl.: H04W 72/0446

(54) **SIGNAL TRANSMISSION METHOD, AND DEVICE**

(30) Priority: 30.01.2024 CN 202410128630
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); SHEN, Shuling, Beijing 100085 (CN)
(74) Representative: Studio Torta S.p.A.
(86) International application number: PCT/CN2025/073751
(87) International publication number: WO 2025/162093

(57) **Abstract**

A signal transmission method, and a device. The method comprises: transmitting a first query signal or a response signal on the basis of resource location information, wherein the resource location information is acquired on the basis of at least one of the following methods: the resource location information is predefined by means of a protocol, the resource location information is preconfigured by means of a network device, the resource location information is predefined by means of an Internet-of-Things device, the resource location information is acquired by means of the calculation of the Internet-of-Things device, or the resource location information is indicated by means of the network device on the basis of a second query signal.

## Description

### CROSS-REFERENCES TO RELATED APPLICATIONS

The present application claims priority to Chinese Patent Application No. 2024101286300, filed on January 30, 2024, entitled "Signal Transmission Method, and Device", which is hereby incorporated by reference in its entirety.

### FIELD

The present application relates to the field of communication, and in particular, to a signal transmission method, and device.

### BACKGROUND

The 3rd generation partnership project (3GPP) defines a new device type of Internet of Things (IoT): Ambient Internet of Things (A-IoT). A-IoT devices are low end IoT devices with low complexity, low cost, and low power. A-IoT devices have no or limited power supply, and have low energy consumption and low cost. A-IoT includes three device types: device A, device B, and device C. Device A and device B have no or limited power supply, cannot actively communicate, and can only backscatter the received signals, carrying information in the backscattered signals. Device C can actively send signals. Due to the low power consumption, low complexity, and no or limited power supply of A-IoT devices, the signals and procedures used for access and paging in existing new radio (NR) systems cannot be used in the current communication scenarios of A-IoT devices. Therefore, for those skilled in the art, how to achieve communication of A-IoT devices is a technical problem that needs to be solved.

### BRIEF SUMMARY

To address the problems existing in the prior art, the present application provides a signal transmission method and device.

An embodiment of the present application provides a signal transmission method, performed by an Internet of Things, IoT, device, including:
transmitting, based on resource location information, a first query signal or a response signal;
where the resource location information is obtained based on at least one of the following methods: protocol predefinition, network device preconfiguration, IoT device predefinition, IoT device calculation, or network device indication based on a second query signal.

In an embodiment, transmitting, based on the resource location information, the first query signal or the response signal includes:
receiving, based on resource location information of the first query signal, the first query signal sent from a first device at a first moment; and
sending, based on resource location information of the response signal, the response signal to the first device after a first duration from the first moment;
   or,
sending, based on resource location information of the first query signal, the first query signal to a second device at a second moment; and
receiving, based on resource location information of the response signal, the response signal sent from the second device after a second duration from the second moment.

In an embodiment, the resource location information includes at least one of the following: resource location information of time domain, resource location information of frequency domain, or resource location information of spatial domain; and
a predefined way includes at least one of the following:
signaling configuration of a network device, configuration of the IoT device before leaving a factory, or configuration of the IoT device before accessing a network.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, before transmitting, based on the resource location information, the first query signal or the response signal, the method further includes:
obtaining, based on a target identifier and a predefined rule, the resource location information; or,
obtaining, based on a target identifier, the resource location information using a first functional relationship;
where the target identifier includes at least one of the following: a physical identifier of the IoT device, a group identifier of the IoT device, an identifier of a cell, or an identifier of a third party server.

In an embodiment, obtaining, based on the target identifier, the resource location information using the first functional relationship includes:
determining, based on the target identifier, a start resource location of the resource location information using the first functional relationship.

In an embodiment, determining, based on the target identifier, the start resource location of the resource location information using the first functional relationship includes:
obtaining, based on the target identifier, a start resource position of at least one of time domain resources, frequency domain resources, or spatial domain resources within a first time window; where the start resource position is based on at least one of a time domain unit, a frequency domain unit, or a spatial domain unit.

In an embodiment, where the target identifier and a start resource location have a one-to-one correspondence; or,
the target identifier and a start resource location have a many-to-many correspondence.

In an embodiment, the first time window is a transmission cycle of the IoT device, or any predefined time period, or a time period configured by a network device.

In an embodiment, in case that the resource location information is resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after a time period indicated by the first timing information expires, or, the first timing information is maximum timing information;
the information of the second time window is used to indicate that the response signal is sent within the second time window.

In an embodiment, transmitting the response signal includes:
in case that the first timing information is the maximum timing information, selecting second timing information based on a predefined rule; and
transmitting the response signal after a time period indicated by the second timing information expires.

In an embodiment, sending the response signal to the first device includes:
sending the response signal to the first device by backscattering or direct transmission.

In an embodiment, where the response signal carries a sequence generated according to first information and a predefined rule, where the first information includes at least one of the following: a physical identifier of the IoT device, a group identifier of the IoT device, or an identifier of a cell;
the sequence includes first timing information indicated by the second query signal.

In an embodiment, the first query signal includes at least one of the following: an excitation signal, an energy harvesting signal, energy storage information, indication information for harvesting information, indication information for sending a reference signal, synchronization information, timing information, grouping information, function classification information, application scenario information, priority information, access parameter configuration information, paging parameter configuration information, network device information, IoT device information, IoT device grouping information, activation signaling, deactivation signaling, a threshold for the IoT device to reflect or send a signal, or acknowledgment, ACK, information;
where the response signal includes at least one of the following: IoT device information, ACK information, or information sent from the IoT device;
where the IoT device information includes at least one of the following: an identifier of the IoT device or a group identifier of the IoT device.

An embodiment of the present application further provides a signal transmission method, performed by a first device, including:
transmitting, based on resource location information, a first query signal;
where the resource location information is obtained based on at least one of the following methods: protocol predefinition, network device preconfiguration, IoT device predefinition, IoT device calculation, or network device indication based on a second query signal.

An embodiment of the present application further provides an Internet of Things, IoT, device, including: a memory, a transceiver, and a processor;
where the memory is used for storing a computer program; the transceiver is used for receiving and transmitting data under the control of the processor; and the processor is used for reading the computer program in the memory and implementing the steps of signal transmission method described above.

An embodiment of the present application further provides a first communication device, including: a memory, a transceiver, and a processor;
where the memory is used for storing a computer program; the transceiver is used for receiving and transmitting data under the control of the processor; and the processor is used for reading the computer program in the memory and implementing the steps of signal transmission method described above.

An embodiment of the present application provides a signal transmission apparatus, used in an Internet of Things, IoT, device, including:
a first processing unit, used for transmitting, based on resource location information, a first query signal or a response signal;
where the resource location information is obtained based on at least one of the following methods: protocol predefinition, network device preconfiguration, IoT device predefinition, IoT device calculation, or network device indication based on a second query signal.

An embodiment of the present application further provides a signal transmission apparatus, used in a first device, including:
a second processing unit, used for transmitting, based on resource location information, a first query signal;
where the resource location information is obtained based on at least one of the following methods: protocol predefinition, network device preconfiguration, IoT device predefinition, IoT device calculation, or network device indication based on a second query signal.

An embodiment of the present application provides a processor readable storage medium storing a computer program, where the computer program causes a processor to perform the signal transmission method described above.

An embodiment of the present application provides a non-transient readable storage medium storing a computer program, where the computer program causes a processor to perform the signal transmission method described above.

An embodiment of the present application provides a communication device storing a computer program, where the computer program causes the communication device to perform the signal transmission method described above.

An embodiment of the present application provides a chip product storing a computer program, where the computer program causes the chip product to perform the signal transmission method described above.

According to the signal transmission apparatus and device, a first query signal or a response signal is transmitted based on resource location information, where the resource location information is obtained based on at least one of the following methods: protocol predefinition, network device preconfiguration, IoT device predefinition, IoT device calculation, or network device indication based on a second query signal. This enables the IoT device to transmit the first query signal or response signal based on the resource location information, thereby realizing communication of the IoT devices. The resource location information may be obtained through multiple methods, which have greater flexibility and lower complexity.

### BRIEF DESCRIPTION OF THE DRAWINGS

In order to clearly illustrate the solutions according to the embodiments of the present application, the accompanying drawings used in the description of the embodiments are briefly introduced below. It should be noted that the drawings in the following description are only some embodiments of the present application. For those of ordinary skill in the art, other drawings can be obtained according to these drawings without creative efforts.
FIG. 1 is a first schematic flowchart of a signal transmission method according to an embodiment of the present application;
FIG. 2 is a schematic diagram of a principle of dividing the sub-channel in the signal transmission method according to an embodiment of the present application;
FIG. 3 is a schematic diagram of a principle of periodic configuration in the signal transmission method according to an embodiment of the present application;
FIG. 4 is a schematic diagram illustrating correspondence between target identifiers and start resource locations in the signal transmission method according to an embodiment of the present application;
FIG. 5 is a first schematic diagram illustrating a principle of sending and/or receiving a first query signal within a first time window in the signal transmission method according to an embodiment of the present application;
FIG. 6 is a second schematic diagram illustrating a principle of sending and/or receiving a first query signal within a first time window in the signal transmission method according to an embodiment of the present application;
FIG. 7 is a third schematic diagram illustrating a principle of sending and/or receiving a first query signal within a first time window in the signal transmission method according to an embodiment of the present application;
FIG. 8 is a first schematic diagram illustrating a principle of sending and/or receiving a first query signal on-demand in the signal transmission method according to an embodiment of the present application;
FIG. 9 is a second schematic diagram illustrating a principle of sending and/or receiving a first query signal on-demand in the signal transmission method according to an embodiment of the present application;
FIG. 10 is a schematic diagram of an association rule of the signal transmission method according to an embodiment of the present application;
FIG. 11 is a schematic diagram of a relative position offset of the response signal relative to the query signal in the time domain in the signal transmission method according to an embodiment of the present application;
FIG. 12 is a first schematic diagram illustrating the timing information of the response signal relative to the query signal in the signal transmission method according to an embodiment of the present application;
FIG. 13 is a second schematic diagram illustrating the timing information of the response signal relative to the query signal in the signal transmission method according to an embodiment of the present application;
FIG. 14 is a schematic diagram of the response signal being sent according to the indicated time window information in the signal transmission method according to an embodiment of the present application;
FIG. 15 is a second schematic flowchart of a signal transmission method according to an embodiment of the present application;
FIG. 16 is a structural schematic diagram of an IoT device according to an embodiment of the present application;
FIG. 17 is a structural schematic diagram of a first device according to an embodiment of the present application;
FIG. 18 is a first structural schematic diagram of a signal transmission apparatus according to an embodiment of the present application; and
FIG. 19 is a second structural schematic diagram of a signal transmission apparatus according to an embodiment of the present application.

### DETAILED DESCRIPTION

In the embodiments of the present application, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In the embodiments of the application, the term "multiple" refers to two or more, and other quantifiers are similar thereto.

The solutions according to the present application are clearly and completely described below in combination with the accompanying drawings in the embodiments of the present application. It should be noted that the described embodiments are some embodiments of the present application, rather than all the embodiments. All other embodiments obtained by those skilled in the art based on the embodiments in the present application without inventive effort are within the scope of protection of the present application.

The technical solutions provided by the embodiments of the present application may be applied to a variety of systems, for example, 5G systems or 6G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like. For example, an applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, and the like. These various systems include a terminal device and a network device. The system may further include a core network part, such as an evolved packet system (EPS), a 5G system (5GS), and the like.

The terminal device according to the embodiments of the present application may be a device that provides voice and/or data connectivity to a user, a handheld device with a wireless connection function, or other processing devices connected to a wireless modem. In different systems, the name of the terminal device may also be different. For example, in the 5G system, the terminal device may be called user equipment (UE). A wireless terminal device may communicate with one or more core networks (CN) via a radio access network (RAN). The wireless terminal device may be a mobile terminal device, such as a mobile phone (or "cellular" phone) and a computer with a mobile terminal device, for example, a portable, pocket-sized, handheld, computer-built-in or vehicle-mounted mobile device, which exchanges voice and/or data with the radio access network. For example, a personal communication service (PCS) phone, a cordless phone, a session initiated protocol (SIP) phone, a wireless local loop (WLL) station, a personal digital assistant (PDA), and the like. A wireless terminal device may also be referred to as a system, a subscriber unit, a subscriber station, a mobile station, a mobile, a remote station, an access point, a remote terminal, an access terminal, a user terminal, a user agent, or a user device, which are not limited in the embodiments of the present application.

The network device of the embodiments of the present application may be a base station or a core network device, which may include multiple cells providing services for terminals. Depending on the specific application scenario, a base station may also be called an access point, or it may be a device in the access network that communicates with wireless terminal devices through one or more sectors on the air interface, or a device with other names. The network device may be used to convert received air frames into Internet Protocol (IP) packets and vice versa, acting as a router between the wireless terminal device and the rest of the access network, where the rest of the access network may include an Internet Protocol (IP) communication network. The network device may also coordinate the management of attributes of the air interface. For example, the network device involved in the embodiments of the present application may be a network device (e.g., a base transceiver station, BTS) in global system for mobile communications (GSM) or code division multiple access (CDMA), or a network device (e.g., NodeB) in wide-band code division multiple access (WCDMA), or an evolved network equipment (eNB or e-NodeB) in a long term evolution (LTE) system, a 5G base station (gNB) in a next generation system, or a home evolved Node B (HeNB), relay node, femto, pico, etc., and is not limited in the embodiments of the present application. In some network structures, a network device may include a centralized unit (CU) node and a distributed unit (DU) node. The centralized unit and the distributed unit may also be geographically separated. In some embodiments, the core network device may include, but is not limited to, at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), a unified data management (UDM), a unified data repository (UDR), a network repository function (NRF), a network exposure function (NEF), an application function (AF), a sensing requirement function (SRF), a location management function (LMF), etc.

To facilitate understanding the technical solutions provided in the embodiments of the present application more clearly, some related knowledge will be introduced as follows.

3GPP defines three types of A-IoT devices, including whether they have energy storage capabilities and independent signal transmission capabilities.

### 1. Types and characteristics of A-IoT devices

Based on whether A-IoT devices have energy storage capabilities and independent signal transmission capabilities, 3GPP classifies the A-IoT devices into the following three categories.

Device A: having no energy storage capacity, having no independent signal transmission capacity, and transmitting signals through backscattering.

Device B: having energy storage capacity, having no independent signal transmission capacity, and transmitting signals through backscattering, where the stored energy may be used to amplify the power of the backscattered signal.

Device C: having energy storage capacity, having independent signal transmission capacity, and transmitting signals through radio frequency (RF) devices.

### 2. Backscatter communication

A backscatter communication system consists of an excitation signal source and a signal reflection device. The backscatter communication system generally consists of two parts: a reader and a reflective tag. The reader is used to generate the radio frequency excitation signal, and the reflective tag is a device that can reflect the radio frequency signal. The reader sends an RF signal to the reflective tag, and the reflective tag receives the signal sent from the excitation signal source and reflects the RF signal back. By changing the load impedance of the antenna of the reflective tag, information is modulated into the backscattered signal. In case that the reflection coefficient is configured as a first reflection coefficient, the energy of the excitation signal is completely absorbed by the antenna of the tag. In case that the reflection coefficient is configured as a second reflection coefficient, the excitation signal is completely reflected. In case that the reflection coefficient is configured as a third reflection coefficient, the excitation signal is partially absorbed and partially reflected.

### 3. Possible receiver architectures for A-IoT

For A-IoT devices, due to their extremely simple receiver structure, they may only include some simple receiver components, such as a receiver architecture only based on on-off keying (OOK) signals. Because the receiver cannot perform inverse fast fourier transform (IFFT)/fast fourier transform (FFT) operations, A-IoT devices cannot receive and process the configuration parameters used for accessing and paging, thus failing to complete the accessing and paging procedure.

### 4. New Radio (NR) random access

In the NR system, the base station may assign a unique identifier to the user equipment (UE, also known as a terminal or terminal device) via random access, and at the same time, the base station can also know which terminal devices have accessed. The random access procedure includes:
A. The UE sends a random access preamble sequence (i.e., message 1, Msg1) on the physical random access channel (PRACH).
B. The UE receives a random access response (RAR) message (i.e., message 2, Msg2) on the physical downlink control channel (PDCCH) / physical downlink shared channel (PDSCH).
C. The UE sends message 3 (Msg3) on the physical uplink shared channel (PDSCH).
D. The UE receives the contention resolution message (i.e., message 4, Msg4) on the PDSCH channel.

Before the random access procedure, the terminal obtains, through system broadcast messages, a set of indexes of synchronization signal/PBCH block (SSB), time and frequency resources of a physical layer, random access preamble sequence format, and parameters of a set of random access preamble sequences. Then, the UE generates a random access preamble sequence based on the obtained information and initiates random access on the corresponding random access time and frequency resources of the physical layer.

The base station detects the PRACH. If the preamble sequence is detected, the base station feeds back the corresponding random access response (RAR) information on the PDCCH/PDSCH. After sending the random access preamble sequence, the terminal detects the RAR information fed back on the downlink PDCCH/PDSCH within a RAR time window. If the corresponding RAR information is detected, it means that the random access preamble sequence sent from the UE has been detected by the base station. The RAR information also includes the adjustment amount of the uplink timing advance of the UE. The terminal can obtain uplink synchronization based on the adjustment amount, and then send a scheduling request message for uplink resources to carry out subsequent data transmission.

The random access procedure further includes:
A. The terminal sends message 1, which contains not only the random access preamble sequence but also uplink data.
B. The base station sends message 2. In addition to the random access preamble identifier and timing advance command (TAC), message 2 also contains the UE ID or cell radio network temporary identifier (C-RNTI) used for contention resolution.

### 5. NR paging procedure

In the NR system, the base station finds the terminal by paging, can detect the reachability of the UE, and can perform the following: triggering establishment procedure of the radio resource control (RRC) connection of the UE, triggering RRC recovery, and notifying the UE to update system messages or receiving notifications of earthquake and tsunami warning system(ETWS)/commercial mobility warning service (CMAS). There are two paging triggering methods in NR: core network triggering and base station triggering.

First, the standard defines the monitoring of paging under RRC-Idle/RRC-Inactive. The UE calculates the location of the paging frame (PF) and paging opportunity (PO) according to the parameter configuration. At the PO moment, the UE monitors the downlink control information (DCI) scrambled with the paging radio network temporary identifier (P-RNTI) in the paging search space (SS), and then performs demodulation and decoding to obtain the PDSCH carrying the paging message. After demodulating and decoding the PDSCH, the UE obtains the list information used to record the UEs that have sent the paging message. The UE queries the list. If the UE is in the list, the UE obtains the paging message carried by the PDSCH; otherwise, the UE does not obtain the paging message.

Second, the monitoring of the PDCCH for paging is scrambled with the P-RNTI. The P-RNTI is shared by all UEs. The base station configures the monitoring period, the number of paging radio frames in each period, and the number of POs in each paging radio frame. At the PO moment, the UE needs to monitor paging.

Furthermore, considering that the NR system is provided multiple antennas, when transmitting and receiving the paging, multi-beam transmission and reception need to be considered.

### 6. Resource configuration method for NR transmission signals

The resource configuration method for NR transmission signals includes: static, semi-static, and dynamic resource configuration methods. The static resource configuration method may include configuration methods based on RRC signaling and configuration methods based on broadcast signaling. The configuration methods based on dynamic signaling include configuration methods based on dynamic scheduling signaling and configuration methods based on MAC-CE signaling.

The configuration method based on broadcast signaling includes cell-level parameter configuration information, such as system frame number, subcarrier spacing configuration, SSB subcarrier offset configuration, DMRS-Type A location configuration, PDCCH common control resource set (CORESET) configuration, cell-barred configuration, intrafrequency selection configuration, and reserved bits.

The configuration method based on RRC signaling includes configuration through RRC information elements, and further includes configurations of location information of DL and UL transmission resources, and further includes configuration of location information of data transmission resource and/or control signaling transmission resource, configuration of location information of reference signal transmission resource, configuration of parameters of UE behavior, etc. The UE behavior includes channel measurement, radio resource management (RRM) measurement, etc.

The configuration method based on dynamic signaling includes configuration information for the resource locations of DL and UL dynamic transmissions, such as configuration information for the resource locations of PDSCH and PUSCH data transmissions.

### 7. PRACH resource configuration method

The specific frequency domain location of PRACH is notified separately by 2 bits of signaling. The number of PRACH occasions in the same PRACH slot is 1, 2, 4 and 8. The maximum value of 8 is defined to increase the number of available RACH occasion (RO) resources by frequency division multiplexing under the mapping condition from SSB to RO.

Specifically, it is configured by the following parameters, and the elements contained in the configuration table for each PRACH are as follows:
(1) PRACH configuration index (8-bit indicator): 0-255;
(2) PRACH preamble format;
(3) Configuration period: {10, 20, 40, 80, 160} ms;
(4) Single frequency network (SFN) mod configuration period;
(5) For frequency bands below 6 GHz, subframe numbering is used;
   (5-1) Based on a 15kHz sub-carrier spacing (SCS), a granularity may be 1ms;
   (5-2) For short sequences and 30kHz SCS, the number of PRACH slots in a subframe may be 1 or 2;
   When there is only one RACH slot, the second RACH slot is used.
   (5-3) For short sequences and 15kHz SCS, the number of PRACH slots in a subframe is 1;
(6) For frequency bands above 6 GHz, PRACH slot numbering is used;
   (6-1) Based on 60kHz SCS, a granularity may be 0.25ms;
   (6-2) For a 120kHz SCS, the number of PRACH slots within 0.25ms may be 1 or 2;
   When there is only one RACH slot, the second RACH slot is used.
(7) For a 60kHz SCS, the number of PRACH slots within 0.25ms is 1;
   (7-1) Start symbol index (Msg1 SCS for short sequences, 15kHz for long sequences);
(8) Number of time domain PRACH occasions within a PRACH slot.

In the prior art, random access for NR is implemented through RACH, and the specific location of resources is configured by the aforementioned configuration methods and parameters. For A-IoT devices, their component structure and signal processing methods are simple, therefore, it is impossible to use NR, or LTE, or existing access procedures and corresponding resource configurations of access parameter. Therefore, it is necessary to design access procedures and corresponding configuration methods of access resource for A-IoT devices.

Based on the above issues, the current random access procedure and paging of the NR system are not applicable to A-IoT devices. Therefore, further design is needed for the random access and paging of A-IoT devices. Further a resource configuration method is needed. The present application provides a method for low power, low complexity, and low-end A-IoT devices to complete access and paging when the receiving and transmitting links are simple.

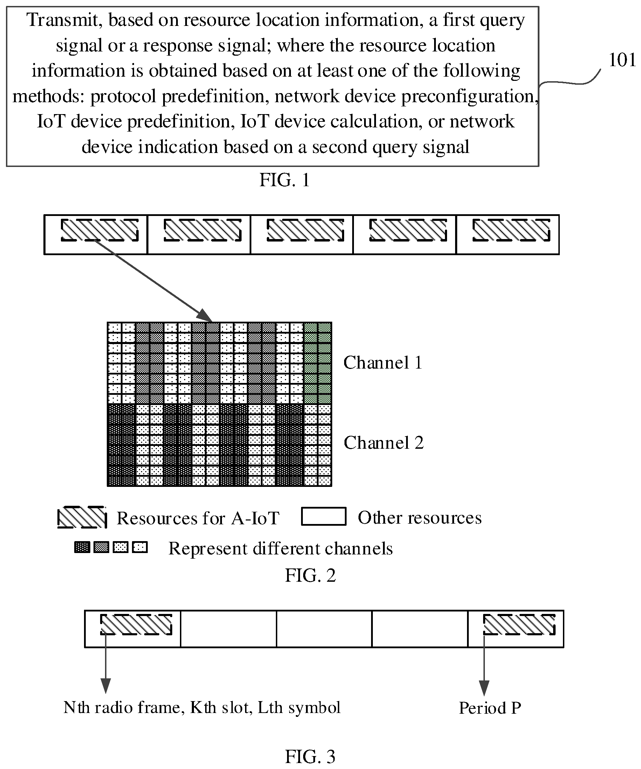

FIG. 1 is a first schematic flowchart of a signal transmission method according to an embodiment of the present application. As shown in FIG. 1, a signal transmission method is provided in an embodiment of the present application, the execution body of which may be an Internet of Things (IoT) device, such as an A-IoT device. The method includes:
Step 101: transmit, based on resource location information, a first query signal or a response signal;
where the resource location information is obtained based on at least one of the following methods: protocol predefinition, network device preconfiguration, IoT device predefinition, IoT device calculation, or network device indication based on a second query signal.

Specifically, the resource location information may be configured, for example, through protocol predefinition, network device preconfiguration, or obtained through IoT device calculation, or indicated by network device based on a second query signal.

The IoT device transmits the first query signal or response signal based on the resource location information, such as sending/receiving the first query signal or response signal.

In an example, the network device or IoT device configures at least one of common resource of time domain, common resource of frequency domain, or common resource of spatial domain in a predefined manner for the IoT device to send and/or receive the first query signal or response signal.

In the above embodiments, through protocol predefinition, network device preconfiguration, or indication by the second query signal, at least one of resource location information of time domain, resource location information of frequency domain, or resource location information of spatial domain is configured for the first query signal and/or response signal, and the IoT device is indicated to send and/or receive the first query signal and/or response signal, thereby realizing normal data transmission of the IoT device.

According to the method in the embodiment of the present application, a first query signal or a response signal is transmitted based on resource location information, where the resource location information is obtained based on at least one of the following methods: protocol predefinition, network device preconfiguration, IoT device predefinition, IoT device calculation, or network device indication based on a second query signal. This enables the IoT device to transmit the first query signal or response signal based on the resource location information, thereby realizing communication of the IoT devices. The resource location information may be obtained through multiple methods, which have greater flexibility and lower complexity.

In an embodiment, the resource location information includes at least one of the following: resource location information of time domain, resource location information of frequency domain, or resource location information of spatial domain;
a predefined way includes at least one of the following:
configuration via signaling of a network device, configuration before the IoT device leaving a factory, or configuration before the IoT device accessing a network.

Signaling configurations include, for example, higher-layer signaling, non-access stratum (NAS) signaling, etc.

The signaling configuration of network device may be a pre-configuration method for the network device.

In an embodiment, transmitting, based on the resource location information, the first query signal or the response signal includes:
receiving, based on resource location information of the first query signal, the first query signal sent from a first device at a first moment; and
sending, based on resource location information of the response signal, the response signal to the first device after a first duration from the first moment;
   or,
sending, based on resource location information of the first query signal, the first query signal to a second device at a second moment; and
receiving, based on resource location information of the response signal, the response signal sent from the second device after a second duration from the second moment.

In an embodiment, the first device may be a network device, a terminal, a relay node, etc. In an embodiment, the second device may be the same as or different from the first device.

Specifically, the IoT device receives the first query signal sent from the first device at the first moment, and sends a response signal to the first device after a first duration from the first moment. The first duration is, for example, N1 time units, where N is an integer greater than 0. The response signal is sent, for example, by backscattering or direct transmission.

The IoT device sends a first query signal to the second device at a second moment, and receives a response signal from the second device after a second duration from the second moment. The second duration is, for example, N2 time units, where N is an integer greater than 0.

In an embodiment, the time unit may be an absolute time unit or a relative time unit; the absolute time unit may be a microsecond, a millisecond, or a second; the relative time unit may be a radio frame, a subframe, a slot, a symbol, or a specific time unit, such as an A-IoT processor time unit.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, the Io T device performs calculation to obtain the resource location information, in the following ways:
obtaining, based on a target identifier and a predefined rule, the resource location information; or,
obtaining, based on a target identifier, the resource location information using a first functional relationship;
where the target identifier includes at least one of the following: a physical identifier of the IoT device, a group identifier of the IoT device, an identifier of a cell, or an identifier of a third party server.

Specifically, the IoT device obtains resource location information based on a unique target identifier. In an embodiment, the physical identifier of an IoT device may be a physical address.

In an embodiment, obtaining, based on the target identifier, the resource location information using the first functional relationship includes:
determining, based on the target identifier, a start resource location of the resource location information using the first functional relationship.

In an embodiment, determining, based on the target identifier, the start resource location of the resource location information using the first functional relationship includes: obtaining, based on the target identifier, a start resource position of at least one of time domain resources, frequency domain resources, or spatial domain resources within a first time window; where the start resource position is based on at least one of a time domain unit, a frequency domain unit, or a spatial domain unit.

In an embodiment, the target identifier and the start resource location have a one-to-one correspondence; or,
the target identifier and the start resource location have a many-to-many correspondence.

In an embodiment, the first time window is a transmission cycle of the IoT device, or any predefined time period, or a time period configured by a network device.

In an embodiment, in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after the first timing information ends, or, the first timing information is maximum timing information;
the information of the second time window is used to indicate that the response signal is sent within the second time window.

In an embodiment, transmitting the response signal may be achieved by the following ways:
in case that the first timing information is the maximum timing information, selecting the second timing information based on a predefined rule; and
transmitting the response signal after the second timing information ends.

In an embodiment, where the response signal carries a sequence generated according to first information and a predefined rule, where the first information includes at least one of the following: a physical identifier of the IoT device, a group identifier of the IoT device, or an identifier of a cell;
the sequence further includes first timing information indicated by the second query signal.

In an embodiment, the first query signal includes at least one of the following: an excitation signal, an energy harvesting signal, energy storage information, indication information for harvesting information, indication information for sending a reference signal, synchronization information, timing information, grouping information, function classification information, application scenario information, priority information, access parameter configuration information, paging parameter configuration information, network device information, IoT device information, IoT device grouping information, activation signaling, deactivation signaling, a threshold for the IoT device to reflect or send a signal, and acknowledgment, ACK, information;
where the response signal includes at least one of the following:
IoT device information, ACK information, information sent from the IoT device;
where the IoT device information includes at least one of the following: an identifier of the IoT device or a group identifier of the IoT device.

The second query signal is similar to the first query signal, and will not be described in detail here.

Example 1: the network device (such as a base station/core network device) configures the resource location information of the first query signal and/or response signal through predefinition.

Step 1: the network device configures (e.g., pre-configured) resource location information of at least one of time domain, frequency domain, or space domain of a query signal/response signal through predefinition. In an embodiment, the terminal configures resource location information of at least one of time domain, frequency domain, spatial domain of the query signal/response signal through predefinition.

In an embodiment, the sending node for the first query signal may include at least one of the following: a network device (such as a base station), or another node that can send signals, such as a relay node, a terminal node, etc. In the embodiment of the present application, the network device is used to represent the sending node for the first query signal.

The predefined way includes at least one of the following: defined by signaling of the network device (such as NAS signaling), or configured and defined before an A-IoT device leaves the factory, or configured and defined before an A-IoT device accesses the network.

In an embodiment, configuring, by the network device, the resource location information of the first query signal/response signal through predefinition includes:
A-IoT device defines at least one of resource location information of time domain, resource location information of frequency domain, or resource location information of spatial domain through predefinition. The A-IoT device then sends and/or receives a first query signal and/or response signal based on the at least one of predefined resource location information of time domain, predefined resource location information of frequency domain, or predefined resource location information of spatial domain. The at least one of predefined resource location information of time domain, predefined resource location information of frequency domain, or predefined resource location information of spatial domain may include at least one of the following:
1) Divide at least one of time domain resources, frequency domain resources, or spatial domain resources into M sub-channels. The at least one of time domain resources, frequency domain resources, or spatial domain resources for the A-IoT device to send and/or receive the response signal and/or query signal can be configured as at least one of the M sub-channels. The sub-channel is composed of at least one of specific time domain units, frequency domain units, or spatial domain units, as shown in FIG. 2.
2) The time domain resource location of the query signal is predefined as the location of a specific radio frame, subframe, slot, or symbol. For example, the time domain resource location is the start position of X radio frames, or the start position of Y specified subframes in X radio frames, or the start position of Z symbols in Y specified subframes in X radio frames;
where M, X, Y, and Z are all integers greater than 0, and may be predefined or configured by the network device.

The at least one of predefined time domain resources, predefined frequency domain resources, or predefined spatial domain resources may be periodic, triggered, or aperiodic. FIG. 3 shows a periodic configuration.

Step 2: the network device sends a first query signal and/or receives a response signal based on the resource location information.

The network device obtains at least one of resource location information of time domain, resource location information of frequency domain, or resource location information of spatial domain for sending and/or receiving the first query signal and/or response signal through predefinition, and sends the first query signal and/or receives the response signal according to the resource configuration information.

Step 3: the terminal obtains resource location information.

In an embodiment, the terminal is an A-IoT device, or a terminal including A-IoT functions such as a mobile phone, tablet, or computer. In an embodiment of the present application, the terminal and the A-IoT device are not distinguished.

The terminal obtains resource location information through predefinition as described in step 1, which are not repeated here.

Step 4: the terminal sends and/or receives a response signal/first query signal based on the resource location information in step 1 or step 2.

Specifically, the terminal obtains at least one of resource location information of time domain, resource location information of frequency domain, or resource location information of spatial domain for receiving and/or sending the first query signal and/or response signal through predefinition according to step 3, and receives the first query signal and/or sends the response signal according to the resource configuration information.

Example 2: A-IoT device obtains resource location information of the first query signal and/or response signal through calculation.

Step 1: the network device obtains resource location information of at least one of time domain, frequency domain, spatial domain of a first query signal/response signal through predefinition. In an embodiment, the terminal obtains resource location information of at least one of time domain, frequency domain, spatial domain of the query signal/response signal through predefinition.

In an embodiment, obtaining, by the network device, resource location information of at least one of time domain, frequency domain, spatial domain of first query signal/response signal through predefinition includes:
calculating and obtaining, by the network device, at least one of resource location information of time domain, resource location information of frequency domain, or resource location information of spatial domain used for sending and/or receiving the query signal and/or response signal corresponding to A-IoT device through target identifier;
the target identifier includes at least one of the following: the physical identifier of the A-IoT device (such as physical address), the group identifier of the A-IoT device, the identifier of the cell, or the identifier of the third-party server.

In an embodiment, obtaining, by the network device, at least one of resource location information of time domain, resource location information of frequency domain, or resource location information of spatial domain used for sending and/or receiving the first query signal corresponding to A-IoT device through target identifier includes:
calculating, based on the target identifier and the predefined rule, at least one of resource location information of time domain, resource location information of frequency domain, or resource location information of spatial domain used for sending and/or receiving the first query signal/response signal; specifically:
calculating, based on the target identifier, the start resource location information of at least one of resource location information of time domain, resource location information of frequency domain, or resource location information of spatial domain used for sending and/or receiving the first query signal;
or, start resource location information for transmitting the first query signal = first functional relationship (target identifier); where, the first functional relationship may represent that within the first time window, the start resource location of at least one of the time domain, frequency domain, and spatial domain may be obtained based on the target identifier. The start resource location of at least one of the time domain, frequency domain, and spatial domain may be a start resource location based on at least one of a time domain unit, a frequency domain unit, or a spatial domain unit. The time domain unit may be an absolute time unit or a relative time unit. The absolute time unit may be a microsecond, millisecond, or second. The relative time unit may be a radio frame, subframe, slot, symbol, or a specific time unit, such as an A-IoT processor time unit.

For example, the predefined rule is that, based on the group identifier ID of the A-IoT device, odd-numbered A-IoT device IDs are group 1, and even-numbered A-IoT device IDs are group 2. Group 1 corresponds to the start position of the odd-numbered radio frame, and group 2 corresponds to the start position of the even-numbered radio frame. Then, the base station sends a first query signal to group 1 at the start position of the odd-numbered radio frame, or receives a response signal from group 1 at the start position of the odd-numbered radio frame.

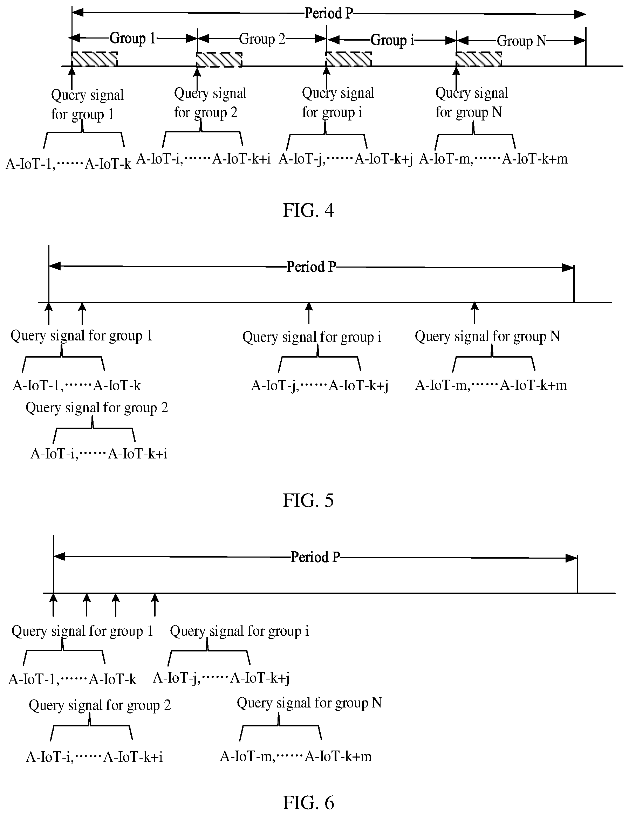

In an embodiment, at least one of the start resource location of the time domain, the start resource location of frequency domain, or the start resource location of spatial domain may have a one-to-one correspondence, a one-to-many mapping relationship, or a many-to-many mapping relationship with the target identifier. For example, at least one of the start resource location of the time domain, the start resource location of frequency domain, and the start resource location of spatial domain may be obtained by randomly selecting a start time unit within a time window. Then, different A-IoT devices may select the same or different start locations within the window. As shown in FIG. 4, FIG. 4 shows the unique location of transmission and/or reception resources of first query signal/response signal corresponding to the target identifier.

At least one of resource location information of time domain, resource location information of frequency domain, or resource location information of spatial domain may be periodic, triggered, or aperiodic.

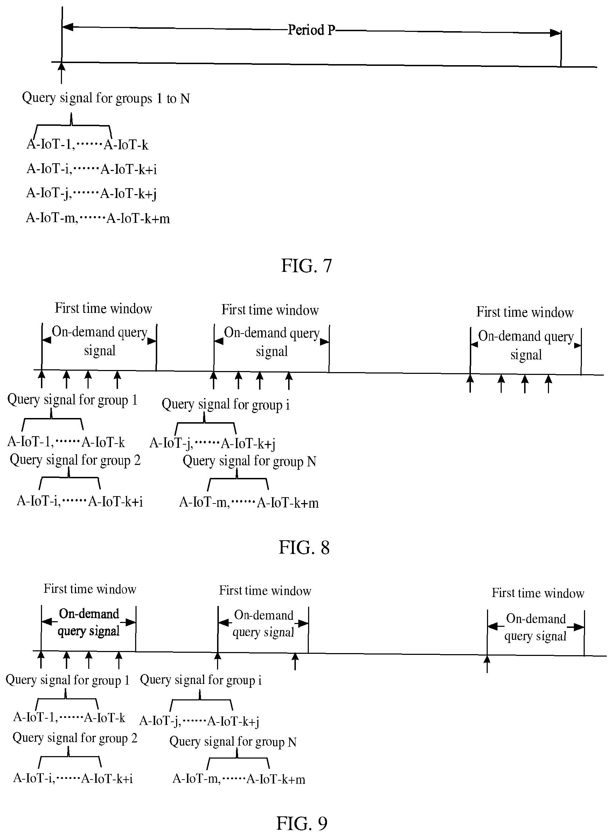

Example 2-1: The A-IoT devices are divided into N groups. The query signal is sent periodically. The first time window is the sending period of the first query signal, and the period is P. Then, within one period P, the N groups need to be sent separately without resource overlap, or the N groups may be sent simultaneously within one period, or the N groups may be sent randomly within one period. Furthermore, the M terminals in one group may send simultaneously, or they may send separately within sending intervals of one group, as shown in FIGS. 5 to 7. FIG. 5 shows the random sending and/or receiving of the first query signal within the first time window (period P). FIG. 6 shows the sending and/or receiving of the first query signal within a burst within the first time window (period P), and FIG. 7 shows the sending and/or receiving of the first query signal at the start position of the first time window.

Example 2-2: The A-IoT devices are divided into N groups. The first query signal is sent on demand, i.e., non-periodic. The first time window is a period of time during which the query signal is sent, i.e., within a time window (starting from the trigger command and ending with the configured time window length), N groups are sent respectively. The specific sending method is the same as in example 2-1. As shown in FIG. 8, the query signal is sent/received on demand. The base station sends the query signal within the first time window. Each time window can include all A-IoT devices or all A-IoT groups. As shown in FIG. 9, the query signal is sent/received on demand. The base station sends the first query signal within the first time window. Each time window can include some A-IoT devices or some A-IoT groups.

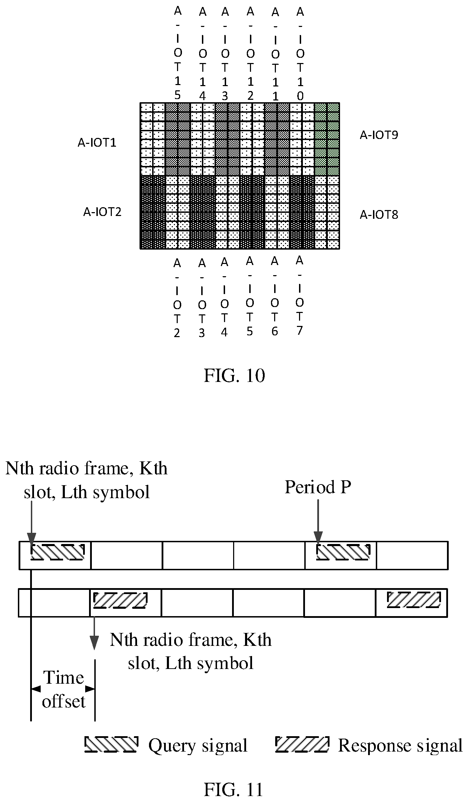

Example 2-3: 1) Predefine at least one of a pattern/channel of the time domain, a pattern/channel of frequency domain, or a pattern/channel of spatial domain, and each pattern/channel is associated with at least one group of A-IoT devices. 2) A-IoT devices obtain at least one of a pattern/channel of the time domain, a pattern/channel of frequency domain, or a pattern/channel of spatial domain through association rules, thereby obtaining at least one of resource location information of time domain, resource location information of frequency domain, or resource location information of spatial domain. Specifically, the association rules can be A-IoT group identifiers or device identifiers, and associate at least one of the pattern/channel of the time domain, the pattern/channel of frequency domain or the pattern/channel of spatial domain of the response signal. As shown in FIG. 10, the first query signal sub-channel is associated with the A-IoT group identifier or the A-IoT device identifier. In an embodiment, the predefined rules include the association rules.

Step 2: the network device sends a first query signal and/or receives a response signal based on the resource location information.

The network device obtains at least one of resource location information of time domain, resource location information of frequency domain, or resource location information of spatial domain for sending and/or receiving the first query signal and/or response signal according to the calculation method, and sends the first query signal and/or receives the response signal according to the resource location information.

Step 3: the terminal obtains resource location information.

The terminal obtains resource location information using the calculation method described in step 1. That is, the A-IoT device calculates the resource location information of the first query signal and/or response signal based on the target identifier. The specific calculation method is the same as that on the network device side, and will not be repeated here.

Step 4: the terminal sends and/or receives a response signal/first query signal based on the resource location information in step 1 or step 2.

Specifically, the terminal obtains at least one resource location information in the time-frequency-spatial domain for receiving and/or sending the first query signal and/or response signal through predefinition according to step 3, and receives the first query signal and/or sends the response signal according to the resource location information.

Example 3: configure the resource location information of the second query signal through predefinition, where the second query signal carries the resource location information of the first query signal.

Step 1: the network device configures or calculates resource location information of at least one of time domain, frequency domain, spatial domain of second query signal through predefinition. In an embodiment, the terminal configures or calculates resource location information of at least one of time domain, frequency domain, spatial domain of second query signal through predefinition.

The second query signal includes at least one item of the first query signal.

In an embodiment, the resource location information of the second query signal may be obtained through predefinition. The specific method is the same as the foregoing embodiments, and will not be repeated here.

Step 2: the network device indicates the resource location information of at least one of the time domain, frequency domain, and spatial domain of the first query signal through the second query signal;
the resource location information used for transmitting and/or receiving the first query signal is based on the indication of the second query signal.

In an embodiment, obtaining, by the network device, at least one of resource location information of time domain, resource location information of frequency domain, or resource location information of spatial domain of the second query signal according to predefined rules including: calculating and obtaining, by the network device, at least one of resource location information of time domain, resource location information of frequency domain, or resource location information of spatial domain used for transmitting and receiving the second query signal through the target identifier.

The network device configures at least one of common resource of time domain, common resource of frequency domain, or common resource of spatial domain through predefinition for A-IoT devices to send and/or receive a second query signal. The configuration method of the predefined at least one of common resource of time domain, common resource of frequency domain, or common resource of spatial domain is the same as in example 1.

Furthermore, the network device configures at least one of resource location information of time domain, resource location information of frequency domain, or resource location information of spatial domain used for transmitting and receiving the first query signal through the second query signal. At least one of resource location information of time domain, resource location information of frequency domain, or resource location information of spatial domain used for transmitting and receiving the second query signal is configured through predefinition, including at least one of the following: at least one of resource location information of time domain, resource location information of frequency domain, or resource location information of spatial domain used for transmitting and receiving the second query signal can be at least one of common resource of time domain, common resource of frequency domain, or common resource of spatial domain, or it may be periodic. At least one of resource location information of time domain, resource location information of frequency domain, or resource location information of spatial domain used for transmitting and receiving the first query signal is updated according to the indication of the second query signal.

In an embodiment, the time domain resources in the resource location information of at least one of the time domain, frequency domain, and spatial domain used for transmitting the first query signal and the second query signal can be an absolute time and/or a relative time and/or timers and/or counters. The absolute time may be at least one absolute time unit, such as at least one of seconds, milliseconds, microseconds, and picoseconds. The relative time can be based on at least one relative time unit, which can be based on the time unit of the base station, such as at least one symbol, or slot, or subframe, or radio frame. Or it can be based on the time unit of the A-IoT device, such as at least one symbol, or slot, or subframe, or radio frame, or microprocessor time unit. The resource location information of the frequency domain can be frequency domain resources based on the base station, or the frequency domain resources based on the A-IoT device. The frequency domain resources can be based on at least one of: at least one resource element (RE), at least one resource block (RB), and a specified bandwidth.

Step 3: the network device sends a second query signal and/or receives a response signal.

The network device obtains at least one of resource location information of time domain, resource location information of frequency domain, or resource location information of spatial domain used for sending and/or receiving the second query signal and/or response signal through predefinition and/or a calculation, and/or a second query signal indication, and sends the second query signal and/or receives the response signal according to the resource location information.

Step 4: the terminal obtains resource location information.

The terminal obtains resource location information, as described in example 1 and example 2. That is, the A-IoT device calculates the resource location information used for receiving and/or transmitting the second query signal and/or response signal through predefinition or based on the target identifier. The specific calculation method is the same as that on the network device side, and will not be repeated here.

Step 5: the terminal receives the second query signal.

The terminal receives the second query signal or sends a response signal based on the resource location information in step 4, and obtains the resource location information of the first query signal indicated by the second query signal. The specific content of the first query signal is the same as that on the network device side, and will not be repeated here.

Step 6: the terminal receives the first query signal.

The terminal receives the first query signal, or reflects or sends a response signal, based on the resource configuration information obtained from the first query signal. The first query signal is the same as that on the network device side, and will not be described in detail here.

Example 4: the resource location information of the response signal is indicated by the second query signal.

Step 1: the network device sends a second query signal, indicating resource location information of at least one of the time domain, frequency domain, and spatial domain of the response signal. In an embodiment, the terminal sends a second query signal, indicating resource location information of at least one of: the time domain, frequency domain, and spatial domain of the response signal.

The resource configuration method for the second query signal may include at least one of the methods in example 1, example 2, and example 3.

The step 1 is the same as step 1 in example 1, except that:

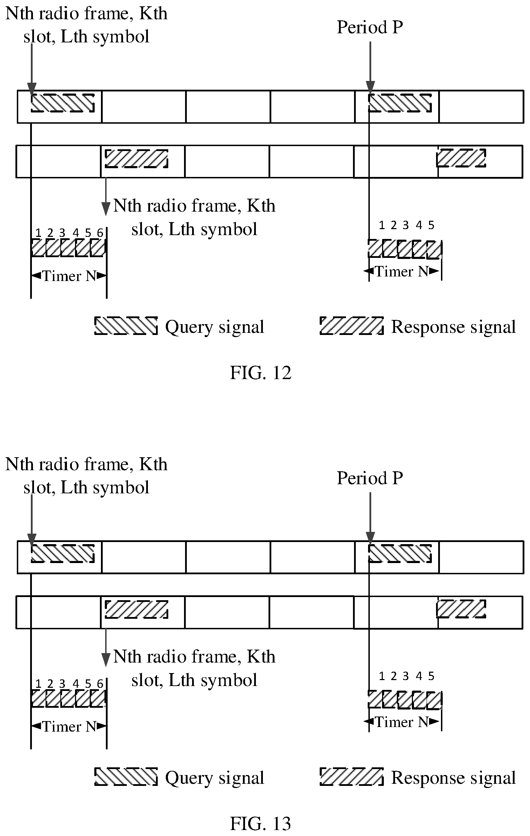

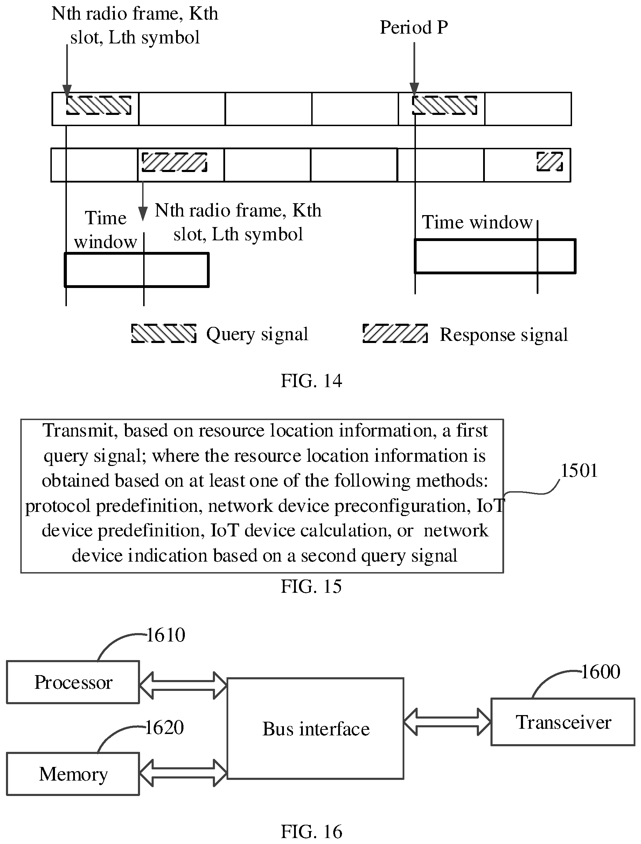

the network device sends a second query signal, indicating resource location information of at least one of the time domain, frequency domain, and spatial domain of the response signal, specifically including at least one of the following:
1) the network device indicates the A-IoT device at least one of resource location information of time domain, resource location information of frequency domain, or resource location information of spatial domain for reflecting the response signal through the second query signal. The A-IoT device reflects the response signal on the indicated at least one of resource location of time domain, resource location of frequency domain, or resource location of spatial domain.
   1-1): indicate the absolute position for reflecting the response signal relative to at least one resource of the time domain, frequency domain, and spatial domain of the second query signal. The absolute position in the time domain can be the position of a radio frame, subframe, symbol, or unit clock. The absolute position in the frequency domain can be an RB, RE, or a specific channel number. The absolute position in the spatial domain can correspond to an antenna number, port number, transceiver unit (TxRU) number, channel state information - reference signal (CSI-RS) resource identifier, or CSI reporting identifier.
   1-2): indicate relative position offset for reflecting the response signal relative to at least one resource of the time domain, frequency domain, and spatial domain of the second query signal. FIG. 11 shows the relative position offset of time domain resources.
2) The network device indicates the A-IoT device the timing information for reflecting of the response signal through the second query signal, and the A-IoT device selects and sends the response signal based on the indicated timing information.
   2-1): The timing information indicated by the second query signal indicates to reflect the response signal after the timing information ends. For example, as shown in FIG. 12, the timing information may be a timer, or may be based on the number of time units, where the time unit can be a time unit based on the transmitter agreed upon by the transmitter and receiver, or a time unit based on the receiver agreed upon by the transmitter and receiver, or a time unit agreed upon by the transmitter and receiver.
   2-2): The timing information indicated by the second query signal is the maximum timing information. In case that the A-IoT device reflects a response signal, the A-IoT device first selects a timing information between [0, maximum timing information] according to a predefined rule, and then after the selected timing information ends, the A-IoT device reflects the response signal. The predefined rule may include: random selection, selection based on target identifier, etc. The unit of the timing information may be the timing unit or transmission unit of the transmitter based on the second query signal and/or the time unit of the A-IoT device. For example, the time unit may be a radio frame, subframe, slot, symbol, unit clock, or the time unit of a microprocessor. As shown in FIG. 13, the response signal is sent according to predefined rules between [0, maximum timing information].
3) The network device indicates the A-IoT device the time window information for reflecting the response signal through the second query signal, and the A-IoT device reports within the indicated time window. The A-IoT device reflects the response signal within the indicated time window according to a predefined rule. The indicated time window information may be the defined maximum time window information, and the A-IoT device randomly selects a time within the time window to reflect the response signal, or the second query signal indicates a window information of a random time length, and the A-IoT device randomly selects a time within the window information of the indicated time length to reflect the response signal, as shown in FIG. 14.
4) Based on methods 1), 2), and 3), the A-IoT device uses different sequences to reflect the response signal.

The A-IoT device generates sequences according to predefined rules. The sequence is initialized by Cell ID/A-IoT group ID/A-IoT physical ID. The sequence can be a random sequence, a pseudo-random sequence, a gold sequence, or a pseudo-random (PN) sequence.

Step 2: the network device receives the response signals based on resource location information.

The network device obtains at least one of resource location information of time domain, resource location information of frequency domain, or resource location information of spatial domain for sending and/or receiving the first query signal and/or response signal through predefinition, and sends the first query signal and/or receives the response signal according to the resource location information.

Step 3: the terminal obtains the resource location information of the response signal.

The terminal obtains resource location information through predefinition as described in step 1, which are not repeated here.

Step 4: the terminal sends and/or receives a response signal/first query signal based on the resource location information in step 1 or step 2.

Specifically, the terminal obtains at least one of resource location information of time domain, resource location information of frequency domain, or resource location information of spatial domain for receiving and/or sending the first query signal and/or response signal through predefinition according to step 3, and receives the first query signal and/or sends the response signal according to the resource location information.

FIG. 15 is a second schematic flowchart of a signal transmission method according to an embodiment of the present application. As shown in FIG. 15, a signal transmission method is provided in an embodiment of the present application, the execution body of which may be a network device, such as a base station or a core network device. The method includes:

Step 1501: transmitting, based on resource location information, a first query signal;
where the resource location information is obtained based on at least one of the following methods: protocol predefinition, network device preconfiguration, IoT device predefinition, IoT device calculation, or network device indication based on a second query signal.

In an embodiment, transmitting, based on the resource location information, the first query signal includes:
sending, based on resource location information of the first query signal, the first query signal to an Internet of Things, IoT, device at a first moment;
the method further includes:
   receiving, based on resource location information of the response signal, the response signal sent from the IoT device after a first duration from the first moment.

In an embodiment, the resource location information includes at least one of the following: resource location information of time domain, resource location information of frequency domain, or resource location information of spatial domain;
a predefined way includes at least one of the following:
configuration via signaling of a network device, configuration before the IoT device leaving a factory, or configuration before the IoT device accessing a network.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after the first timing information ends, or, the first timing information is maximum timing information;
the information of the second time window is used to indicate that the response signal is sent within the second time window.

It should be noted that the signal transmission method provided in the embodiments of the present application is based on the same principle as all the method steps implemented by the method embodiment with the execution subject being an IoT device, and can achieve the same technical effect. Therefore, the parts and beneficial effects that are the same as those in the method embodiment will not be described in detail here.

FIG. 16 is a schematic structural diagram of an IoT device according to an embodiment of the present application. As shown in FIG. 16, the IoT device includes a memory 1620, a transceiver 1600, and a processor 1610.

The memory 1620 is used for storing a computer program; the transceiver 1600 is used for receiving and transmitting data under the control of the processor 1610; and the processor 1610 is used for reading the computer program in the memory 1620 and performing the following operations:
transmitting, based on resource location information, a first query signal or a response signal;
where the resource location information is obtained based on at least one of the following methods: protocol predefinition, network device preconfiguration, IoT device predefinition, IoT device calculation, or network device indication based on a second query signal.

The transceiver 1600 is used for receiving and transmitting data under the control of the processor 1610.

In FIG. 16, the bus architecture may include any number of interconnected buses and bridges, specifically various circuits linked together by one or more processors represented by processor 1610 and memory represented by memory 1620. The bus architecture may also link together various other circuits such as peripherals, regulators and power management circuits, which are well known in the art and will not be described further in the present application. The bus interface provides the interface. The transceiver 1600 may consist of multiple components, including a transmitter and a receiver, providing a unit for communicating with various other devices over a transmission medium, including wireless channels, wired channels, optical cables, and other transmission media. The processor 1610 is responsible for managing the bus architecture and general processing, and the memory 1620 can store data used by the processor 1610 when performing operations.

The processor 1610 may be a central processing unit (CPU), an application specific integrated circuit (ASIC), a field programmable gate array (FPGA), or a complex programmable logic device (CPLD). The processor may also adopt a multi-core architecture.

In an embodiment, transmitting, based on the resource location information, the first query signal or the response signal includes:
receiving, based on resource location information of the first query signal, the first query signal sent from a first device at a first moment; and
sending, based on resource location information of the response signal, the response signal to the first device after a first duration from the first moment;
   or,
sending, based on resource location information of the first query signal, the first query signal to a second device at a second moment; and
receiving, based on resource location information of the response signal, the response signal sent from the second device after a second duration from the second moment.

In an embodiment, the resource location information includes at least one of the following: resource location information of time domain, resource location information of frequency domain, or resource location information of spatial domain;
a predefined way includes at least one of the following:
configuration via signaling of a network device, configuration before the IoT device leaving a factory, or configuration before the IoT device accessing a network.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, before transmitting, based on the resource location information, the first query signal or the response signal, the method further includes:
obtaining, based on a target identifier and a predefined rule, the resource location information; or,
obtaining, based on a target identifier, the resource location information using a first functional relationship;
where the target identifier includes at least one of the following: a physical identifier of the IoT device, a group identifier of the IoT device, an identifier of a cell, or an identifier of a third party server.

In an embodiment, obtaining, based on the target identifier, the resource location information using the first functional relationship includes:
determining, based on the target identifier, a start resource location of the resource location information using the first functional relationship.

In an embodiment, determining, based on the target identifier, the start resource location of the resource location information using the first functional relationship includes:
obtaining, based on the target identifier, a start resource position of at least one of time domain resources, frequency domain resources, or spatial domain resources within a first time window; where the start resource position is based on at least one of a time domain unit, a frequency domain unit, or a spatial domain unit.

In an embodiment, the target identifier and the start resource location have a one-to-one correspondence; or,
the target identifier and the start resource location have a many-to-many correspondence.

In an embodiment, the first time window is a transmission cycle of the IoT device, or any predefined time period, or a time period configured by a network device.

In an embodiment, in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after the first timing information ends, or, the first timing information is maximum timing information;
the information of the second time window is used to indicate that the response signal is sent within the second time window.

In an embodiment, transmitting the response signal includes:
in case that the first timing information is the maximum timing information, selecting the second timing information based on a predefined rule; and
transmitting the response signal after the second timing information ends.

In an embodiment, sending the response signal to the first device includes:
sending the response signal to the first device by backscattering or direct transmission.

In an embodiment, where the response signal carries a sequence generated according to first information and a predefined rule, where the first information includes at least one of the following: a physical identifier of the IoT device, a group identifier of the IoT device, or an identifier of a cell;
the sequence further includes first timing information indicated by the second query signal.

In an embodiment, the first query signal includes at least one of the following: an excitation signal, an energy harvesting signal, energy storage information, indication information for harvesting information, indication information for sending a reference signal, synchronization information, timing information, grouping information, function classification information, application scenario information, priority information, access parameter configuration information, paging parameter configuration information, network device information, IoT device information, IoT device grouping information, activation signaling, deactivation signaling, a threshold for the IoT device to reflect or send a signal, and acknowledgment, ACK, information;
where the response signal includes at least one of the following:
IoT device information, ACK information, or information sent from the IoT device;
where the IoT device information includes at least one of the following: an identifier of the IoT device or a group identifier of the IoT device.

It should be noted here that the above-mentioned IoT device provided in the embodiment of the present application can implement all the method steps implemented by the method embodiment in which the execution body is the IoT device, and may achieve the same technical effect. The parts and beneficial effects of this embodiment that are the same as those of the method embodiment will not be described in detail here.

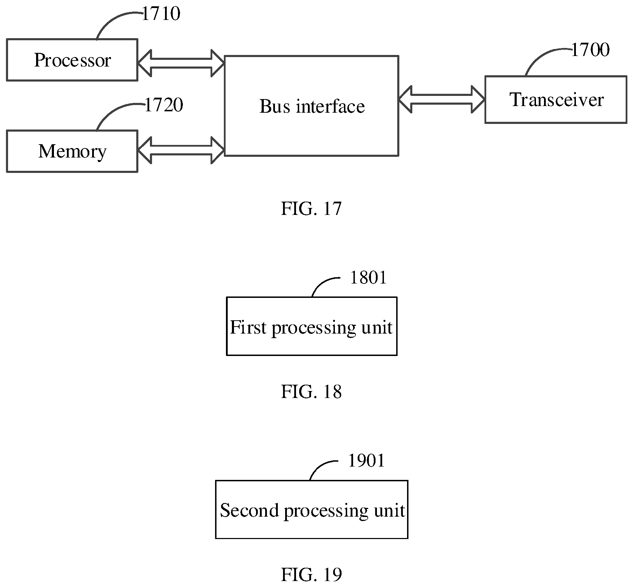

FIG. 17 is a schematic structural diagram of a network device according to an embodiment of the present application. As shown in FIG. 17, the network device includes a memory 1720, a transceiver 1700, and a processor 1710.

The memory 1720 is used for storing a computer program; the transceiver 1700 is used for receiving and transmitting data under the control of the processor 1710; and the processor 1710 is used for reading the computer program in the memory 1720 and performing the following operations:
transmitting, based on resource location information, a first query signal;
where the resource location information is obtained based on at least one of the following methods: protocol predefinition, network device preconfiguration, IoT device predefinition, IoT device calculation, or network device indication based on a second query signal.

The transceiver 1700 is used for receiving and transmitting data under the control of the processor 1710.

In FIG. 17, the bus architecture may include any number of interconnected buses and bridges, specifically various circuits linked together by one or more processors represented by processor 1710 and memory represented by memory 1720. The bus architecture may also link together various other circuits such as peripherals, regulators and power management circuits, which are well known in the art and will not be described further in the present application. The bus interface provides the interface. The transceiver 1700 may consist of multiple components, including a transmitter and a receiver, providing a unit for communicating with various other devices over a transmission medium, including wireless channels, wired channels, optical cables, and other transmission media. The processor 1710 is responsible for managing the bus architecture and general processing, and the memory 1720 can store data used by the processor 1710 when performing operations.

The processor 1710 may be a central processing unit (CPU), an application specific integrated circuit (ASIC), a field programmable gate array (FPGA), or a complex programmable logic device (CPLD). The processor may also adopt a multi-core architecture.

In an embodiment, transmitting, based on the resource location information, the first query signal includes:
sending, based on resource location information of the first query signal, the first query signal to an Internet of Things, IoT, device at a first moment;
receiving, based on resource location information of the response signal, the response signal sent from the IoT device after a first duration from the first moment.

In an embodiment, the resource location information includes at least one of the following: resource location information of time domain, resource location information of frequency domain, or resource location information of spatial domain;
a predefined way includes at least one of the following:
configuration via signaling of a network device, configuration before the IoT device leaving a factory, or configuration before the IoT device accessing a network.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after the first timing information ends, or, the first timing information is maximum timing information;
the information of the second time window is used to indicate that the response signal is sent within the second time window.

It should be noted here that the above-mentioned first device provided in the embodiment of the present application can implement all the method steps implemented by the method embodiment in which the execution body is the first device, and may achieve the same technical effect. The parts and beneficial effects of this embodiment that are the same as those of the method embodiment will not be described in detail here.

The present application also provides a signal transmission apparatus that can meet the communication needs of Internet of Things (IoT) devices, such as random access procedures and paging for IoT devices. It should be noted that the method and the apparatus according to the embodiments of the present application are based on the same conception. Since the principles of the method and the apparatus to solve the problems are similar, the implementation of the apparatus and method can be similar to each other, and the same part will not be repeated.

FIG. 18 is a first structural schematic diagram of a signal transmission apparatus according to an embodiment of the present application. The signal transmission apparatus is used in the IoT device. As shown in FIG. 18, the signal transmission apparatus includes a first processing unit 1801, where
the first processing unit is used for transmitting, based on resource location information, a first query signal or a response signal;
where the resource location information is obtained based on at least one of the following methods: protocol predefinition, network device preconfiguration, IoT device predefinition, IoT device calculation, or network device indication based on a second query signal.

In an embodiment, the first processing unit 1801 is used for:
receiving, based on resource location information of the first query signal, the first query signal sent from a first device at a first moment; and
sending, based on resource location information of the response signal, the response signal to the first device after a first duration from the first moment;
   or,
sending, based on resource location information of the first query signal, the first query signal to a second device at a second moment; and
receiving, based on resource location information of the response signal, the response signal sent from the second device after a second duration from the second moment.

In an embodiment, the resource location information includes at least one of the following: resource location information of time domain, resource location information of frequency domain, or resource location information of spatial domain;
a predefined way includes at least one of the following:
configuration via signaling of a network device, configuration before the IoT device leaving a factory, or configuration before the IoT device accessing a network.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, the first processing unit 1801 is further used for:
obtaining, based on a target identifier and a predefined rule, the resource location information; or,
obtaining, based on a target identifier, the resource location information using a first functional relationship;
where the target identifier includes at least one of the following: a physical identifier of the IoT device, a group identifier of the IoT device, an identifier of a cell, or an identifier of a third party server.

In an embodiment, the first processing unit 1801 is used for:
determining, based on the target identifier, a start resource location of the resource location information using the first functional relationship.

In an embodiment, the first processing unit 1801 is used for:
obtaining, based on the target identifier, a start resource position of at least one of time domain resources, frequency domain resources, or spatial domain resources within a first time window; where the start resource position is based on at least one of a time domain unit, a frequency domain unit, or a spatial domain unit.

In an embodiment, the target identifier and the start resource location have a one-to-one correspondence; or,
the target identifier and the start resource location have a many-to-many correspondence.

In an embodiment, the first time window is a transmission cycle of the IoT device, or any predefined time period, or a time period configured by a network device.

In an embodiment, in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after the first timing information ends, or, the first timing information is maximum timing information;
the information of the second time window is used to indicate that the response signal is sent within the second time window.

In an embodiment, the first processing unit 1801 is used for:
in case that the first timing information is the maximum timing information, selecting the second timing information based on a predefined rule; and
transmitting the response signal after the second timing information ends.

In an embodiment, the first processing unit 1801 is used for:
sending the response signal to the first device by backscattering or direct transmission.

In an embodiment, where the response signal carries a sequence generated according to first information and a predefined rule, where the first information includes at least one of the following: a physical identifier of the IoT device, a group identifier of the IoT device, or an identifier of a cell;
the sequence further includes first timing information indicated by the second query signal.

In an embodiment, the first query signal includes at least one of the following: an excitation signal, an energy harvesting signal, energy storage information, indication information for harvesting information, indication information for sending a reference signal, synchronization information, timing information, grouping information, function classification information, application scenario information, priority information, access parameter configuration information, paging parameter configuration information, network device information, IoT device information, IoT device grouping information, activation signaling, deactivation signaling, a threshold for the IoT device to reflect or send a signal, or acknowledgment, ACK, information;
where the response signal includes at least one of the following:
IoT device information, ACK information, or information sent from the IoT device;
where the IoT device information includes at least one of the following: an identifier of the IoT device and a group identifier of the IoT device.

It should be noted here that the above-mentioned signal transmission apparatus provided in the embodiment of the present application can implement all the method steps implemented by the method embodiment in which the execution body is the IoT device, and may achieve the same technical effect. The parts and beneficial effects of this embodiment that are the same as those of the method embodiment will not be described in detail here.

FIG. 19 is a second structural schematic diagram of a signal transmission apparatus according to an embodiment of the present application. The signal transmission apparatus is used in the first device. As shown in FIG. 19, the signal transmission apparatus includes a second processing unit 1901, where
the second processing unit 1901 is used for transmitting, based on resource location information, a first query signal;
where the resource location information is obtained based on at least one of the following methods: protocol predefinition, network device preconfiguration, IoT device predefinition, IoT device calculation, or network device indication based on a second query signal.

In an embodiment, the second processing unit 1901 is used for:
sending, based on resource location information of the first query signal, the first query signal to an Internet of Things, IoT, device at a first moment;
receiving, based on resource location information of the response signal, the response signal sent from the IoT device after a first duration from the first moment.

In an embodiment, the resource location information includes at least one of the following: resource location information of time domain, resource location information of frequency domain, or resource location information of spatial domain;
a predefined way includes at least one of the following:
configuration via signaling of a network device, configuration before the IoT device leaving a factory, or configuration before the IoT device accessing a network.

In an embodiment, the resource location information is at least one of M sub-channels; the M sub-channels are obtained by dividing at least one of time domain resources, frequency domain resources, or spatial domain resources; or,
the resource location information is predefined resource location information of time domain, where the resource location information of time domain includes at least one of the following: location information of a frame, location information of a subframe, location information of a slot, or location information of a symbol.

In an embodiment, in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or,
information of a second time window for sending the response signal;
where, the first timing information is used to indicate that the response signal is sent after the first timing information ends, or, the first timing information is maximum timing information;
the information of the second time window is used to indicate that the response signal is sent within the second time window.

It should be noted here that the above-mentioned signal transmission apparatus provided in the embodiment of the present application can implement all the method steps implemented by the method embodiment in which the execution body is the network device, and may achieve the same technical effect. The parts and beneficial effects of this embodiment that are the same as those of the method embodiment will not be described in detail here.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as USB flash disk, mobile hard disk, read-only memory (ROM), random access memory (RAM), magnetic disk, or optical disk.

According to an embodiment of the present application, a non-transient readable storage medium is provided, where the non-transient readable storage medium stores computer programs that cause a processor to perform the signal transmission method provided in the above-mentioned embodiments.

It should be noted here that the above-mentioned non-transient readable storage medium provided in the embodiment of the present application may implement all the method steps implemented by the method embodiment and may achieve the same technical effect. The parts and beneficial effects of this embodiment that are the same as those of the method embodiment will not be described in detail here.

In an embodiment, the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

According to an embodiment of the present application, a processor readable storage medium is provided, where the processor readable storage medium stores computer programs that cause a processor to perform the signal transmission method provided in the above-mentioned embodiments.

It should be noted here that the above-mentioned processor readable storage medium provided in the embodiment of the present application may implement all the method steps implemented by the method embodiment and may achieve the same technical effect. The parts and beneficial effects of this embodiment that are the same as those of the method embodiment will not be described in detail here.

According to an embodiment of the present application, a computer-readable storage medium is provided, where the computer-readable storage medium stores computer programs that cause a processor to perform the signal transmission method provided in the above-mentioned embodiments.

It should be noted here that the above-mentioned computer-readable storage medium provided in the embodiment of the present application may implement all the method steps implemented by the method embodiment and may achieve the same technical effect. The parts and beneficial effects of this embodiment that are the same as those of the method embodiment will not be described in detail here.

According to an embodiment of the present application, a communication device is provided, where the communication device stores computer programs that cause the communication device to perform the signal transmission method provided in the above-mentioned embodiments.

It should be noted here that the above-mentioned communication device provided in the embodiment of the present application may implement all the method steps implemented by the method embodiment and may achieve the same technical effect. The parts and beneficial effects of this embodiment that are the same as those of the method embodiment will not be described in detail here.

According to an embodiment of the present application, a chip product is provided, where the chip product stores computer programs that cause the chip product to perform the signal transmission method provided in the above-mentioned embodiments.

It should be noted here that the above-mentioned chip product provided in the embodiment of the present application may implement all the method steps implemented by the method embodiment and may achieve the same technical effect. The parts and beneficial effects of this embodiment that are the same as those of the method embodiment will not be described in detail here.

As well appreciated by those skilled in the art, embodiments of the present application can be provided as a method, system, or computer program product. Accordingly, the present application can take the form of an entirely hardware embodiment, an entirely software embodiment, or an embodiment combining software and hardware aspects. Furthermore, the present application can take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof can be implemented by computer-executable instructions. These computer-executable instructions can be provided to processors of a general-purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions can also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more blocks of the block diagram.

These processor-executable instructions can be loaded onto a computer or other programmable data processing device to cause a series of operational steps to be performed on the computer or other programmable device to produce a computer-implemented process and instructions performed on the computer or other programmable devices provide steps for performing the functions specified in one or more flows in the flowchart and/or one or more blocks of the block diagram.

It should be noted that those skilled in the art may make various modifications and variations to the present application without departing from the scope of the present application. If these modifications and variations on the present application are within the scope of the claims of the present application and their equivalent solutions, the present application is also intended to cover such modifications and variations.

## Claims

1. A signal transmission method, performed by an Internet of Things, IoT, device, comprising:
transmitting, based on resource location information, a first query signal or a response signal;
wherein the resource location information is obtained based on at least one of the following methods: protocol predefinition, network device preconfiguration, IoT device predefinition, IoT device calculation, or network device indication based on a second query signal.

2. The method of claim 1, wherein transmitting, based on the resource location information, the first query signal or the response signal comprises:
receiving, based on resource location information of the first query signal, the first query signal sent from a first device at a first moment; and
sending, based on resource location information of the response signal, the response signal to the first device after a first duration from the first moment;
or
sending, based on resource location information of the first query signal, the first query signal to a second device at a second moment; and
receiving, based on resource location information of the response signal, the response signal sent from the second device after a second duration from the second moment.

3. The method of claim 1 or 2, wherein
the resource location information comprises at least one of the following: resource location information of time domain, resource location information of frequency domain, or resource location information of spatial domain; and
a predefined way comprises at least one of the following:
configuration via signaling of a network device, configuration before the IoT device leaving a factory, or configuration before the IoT device accessing a network.

4. The method of any of claims 1 to 3, wherein
the resource location information is at least one of M sub-channels; the M sub-channels are obtained by dividing at least one of time domain resources, frequency domain resources, or spatial domain resources; or
the resource location information is predefined resource location information of time domain, wherein the resource location information of time domain comprises at least one of the following: location information of a frame, location information of a subframe, location information of a slot, or location information of a symbol.

5. The method of any of claims 1 to 4, wherein before transmitting, based on the resource location information, the first query signal or the response signal, the method further comprises:
obtaining, based on a target identifier and a predefined rule, the resource location information; or,
obtaining, based on a target identifier, the resource location information using a first functional relationship;
wherein the target identifier comprises at least one of the following: a physical identifier of the IoT device, a group identifier of the IoT device, an identifier of a cell, or an identifier of a third party server.

6. The method of claim 5, wherein obtaining, based on the target identifier, the resource location information using the first functional relationship comprises:
determining, based on the target identifier, a start resource location of the resource location information using the first functional relationship.

7. The method of claim 6, wherein determining, based on the target identifier, the start resource location of the resource location information using the first functional relationship comprises:
obtaining, based on the target identifier, a start resource position of at least one of time domain resources, frequency domain resources, or spatial domain resources within a first time window; wherein the start resource position is based on at least one of a time domain unit, a frequency domain unit, or a spatial domain unit.

8. The method of any of claims 5 to 7, wherein
the target identifier and a start resource position have a one-to-one correspondence; or
the target identifier and a start resource position have a many-to-many correspondence.

9. The method of claim 7, wherein
the first time window is a transmission cycle of the IoT device, or any predefined time period, or a time period configured by a network device.

10. The method of any of claims 1 to 9, wherein
in case that the resource position information is resource position information of the response signal and the resource position information of the response signal is indicated by the second query signal, the second query signal is used to indicate at least one of the following:
an absolute position of at least one of: resource position information of time domain of the response signal, resource position information of frequency domain of the response signal, or resource position information of spatial domain of the response signal;
a relative position of the response signal with respect to at least one of: resource position information of time domain of the first query signal or a reference signal, resource position information of frequency domain of the first query signal or a reference signal, or resource position information of spatial domain of the first query signal or a reference signal;
first timing information for sending the response signal; or,
information of a second time window for sending the response signal;
wherein, the first timing information is used to indicate that the response signal is sent after a time period indicated by the first timing information expires, or, the first timing information is maximum timing information;
the information of the second time window is used to indicate that the response signal is sent within the second time window.

11. The method of claim 10, wherein transmitting the response signal comprises:
in case that the first timing information is the maximum timing information, selecting second timing information based on a predefined rule; and
transmitting the response signal after a time period indicated by the second timing information expires.

12. The method of claim 2, wherein transmitting the response signal to the first device comprises:
sending the response signal to the first device by backscattering or direct transmission.

13. The method of any of claims 1 to 12, wherein
the response signal carries a sequence generated according to first information and a predefined rule, wherein the first information comprises at least one of the following: a physical identifier of the IoT device, a group identifier of the IoT device, or an identifier of a cell;
the sequence comprises first timing information indicated by the second query signal.

14. The method of any of claims 1 to 13, wherein the first query signal comprises at least one of the following: an excitation signal, an energy harvesting signal, energy storage information, indication information for harvesting information, indication information for sending a reference signal, synchronization information, timing information, grouping information, function classification information, application scenario information, priority information, access parameter configuration information, paging parameter configuration information, network device information, IoT device information, IoT device grouping information, activation signaling, deactivation signaling, a threshold for the IoT device to reflect or send a signal, or acknowledgment, ACK, information;
wherein the response signal comprises at least one of the following: IoT device information, ACK information, or information sent from the IoT device;
wherein the IoT device information comprises at least one of the following: an identifier of the IoT device or a group identifier of the IoT device.

15. A signal transmission method, performed by a first device, comprising:
transmitting, based on resource position information, a first query signal;
wherein the resource position information is obtained based on at least one of the following methods: protocol predefinition, network device preconfiguration, IoT device predefinition, IoT device calculation, or network device indication based on a second query signal.

16. The method of claim 15, wherein transmitting, based on the resource position information, the first query signal comprises:
sending, based on resource position information of the first query signal, the first query signal to an Internet of Things, IoT, device at a first moment;
the method further comprises:
receiving, based on resource position information of the response signal, the response signal sent from the IoT device after a first duration from the first moment.

17. The method of claim 15 or 16, wherein
the resource position information comprises at least one of the following: resource position information of time domain, resource position information of frequency domain, or resource position information of spatial domain;
a predefined way comprises at least one of the following:
configuration via signaling of a network device, configuration before the IoT device leaving a factory, or configuration before the IoT device accessing a network.

18. The method of any of claims 15 to 17, wherein
the resource position information is at least one of M sub-channels; the M sub-channels are obtained by dividing at least one of time domain resources, frequency domain resources, or spatial domain resources; or
the resource position information is predefined resource position information of time domain, wherein the resource position information of time domain comprises at least one of the following: position information of a frame, position information of a subframe, position information of a slot, or position information of a symbol.

19. The method of any of claims 15 to 18, wherein
in case that the resource position information is the resource position information of a response signal and the resource position information of the response signal is indicated by the second query signal, the second query signal is used to indicate at least one of the following:
an absolute position of at least one of: resource position information of time domain of the response signal, resource position information of frequency domain of the response signal, or resource position information of spatial domain of the response signal;
a relative position of the response signal with respect to at least one of: resource position information of time domain of the first query signal or a reference signal, resource position information of frequency domain of the first query signal or a reference signal, or resource position information of spatial domain of the first query signal or a reference signal;
first timing information for sending the response signal; or
information of a second time window for sending the response signal;
wherein, the first timing information is used to indicate that the response signal is sent after a time period indicated by the first timing information expires, or, the first timing information is maximum timing information;
the information of the second time window is used to indicate that the response signal is sent within the second time window.

20. An Internet of Things, IoT, device, comprising: a memory, a transceiver, and a processor:
wherein the memory is used for storing a computer program; the transceiver is used for receiving and transmitting data under the control of the processor; and the processor is used for reading the computer program in the memory and performing the following operations:
transmitting, based on resource position information, a first query signal or a response signal;
wherein the resource location information is obtained based on at least one of the following methods: protocol predefinition, network device preconfiguration, IoT device predefinition, IoT device calculation, or network device indication based on a second query signal.

21. The IoT device of claim 20, wherein transmitting, based on the resource location information, the first query signal or the response signal comprises:
receiving, based on resource location information of the first query signal, the first query signal sent from a first device at a first moment; and
sending, based on resource location information of the response signal, the response signal to the first device after a first duration from the first moment;
or
sending, based on resource location information of the first query signal, the first query signal to a second device at a second moment; and
receiving, based on resource location information of the response signal, the response signal sent from the second device after a second duration from the second moment.

22. The IoT device of claim 20 or 21, wherein
the resource location information comprises at least one of the following: resource location information of time domain, resource location information of frequency domain, or resource location information of spatial domain;
a predefined way comprises at least one of the following:
configuration via signaling of a network device, configuration before the IoT device leaving a factory, or configuration before the IoT device accessing a network.

23. The IoT device of any of claims 20 to 22, wherein
the resource location information is at least one of M sub-channels; the M sub-channels are obtained by dividing at least one of time domain resources, frequency domain resources, or spatial domain resources; or,
the resource location information is predefined resource location information of time domain, wherein the resource location information of time domain comprises at least one of the following: location information of a frame, location information of a subframe, location information of a slot, or location information of a symbol.

24. The IoT device of any of claims 20 to 23, wherein
before transmitting, based on the resource location information, the first query signal or the response signal, the operations further comprise:
obtaining, based on a target identifier and a predefined rule, the resource location information; or
obtaining, based on a target identifier, the resource location information using a first functional relationship;
wherein the target identifier comprises at least one of the following: a physical identifier of the IoT device, a group identifier of the IoT device, an identifier of a cell, and an identifier of a third party server.

25. The IoT device of claim 24, wherein
obtaining, based on the target identifier, the resource location information using the first functional relationship comprises:
determining, based on the target identifier, a start resource location of the resource location information using the first functional relationship.

26. The IoT device of claim 25, wherein
determining, based on the target identifier, the start resource location of the resource location information using the first functional relationship comprises:
obtaining, based on the target identifier, a start resource position of at least one of time domain resources, frequency domain resources, or spatial domain resources within a first time window; wherein the start resource position is based on at least one of a time domain unit, a frequency domain unit, or a spatial domain unit.

27. The IoT device of any of claims 24 to 26, wherein
the target identifier and the start resource location have a one-to-one correspondence; or
the target identifier and the start resource location have a many-to-many correspondence.

28. The IoT device of claim 26, wherein
the first time window is a transmission cycle of the IoT device, or any predefined time period, or a time period configured by a network device.

29. The IoT device of any of claims 20 to 28, wherein
in case that the resource location information is the resource location information of the response signal and the resource location information of the response signal is indicated by the second query signal, the second query signal is used to indicate at least one of the following:
an absolute position of at least one of: resource location information of time domain of the response signal, resource location information of frequency domain of the response signal, or resource location information of spatial domain of the response signal;
a relative position of the response signal with respect to at least one of: resource location information of time domain of the first query signal or a reference signal, resource location information of frequency domain of the first query signal or a reference signal, or resource location information of spatial domain of the first query signal or a reference signal;
first timing information for sending the response signal; or
information of a second time window for sending the response signal;
where, the first timing information is used to indicate that the response signal is sent after a time period indicated by the first timing information expires, or, the first timing information is maximum timing information;
the information of the second time window is used to indicate that the response signal is sent within the second time window.

30. The IoT device of claim 29, wherein transmitting the response signal comprises:
in case that the first timing information is the maximum timing information, selecting the second timing information based on a predefined rule; and
transmitting the response signal after a time period indicated by the second timing information expires.

31. A first device, comprising: a memory, a transceiver, and a processor:
wherein the memory is used for storing a computer program; the transceiver is used for receiving and transmitting data under the control of the processor; and the processor is used for reading the computer program in the memory and performing the following operations:
transmitting, based on resource location information, a first query signal;
wherein the resource location information is obtained based on at least one of the following methods: protocol predefinition, network device preconfiguration, IoT device predefinition, IoT device calculation, or network device indication based on a second query signal.

32. A signal transmission apparatus, used in an Internet of Things, IoT, device, comprising:
a first processing unit, used for transmitting, based on resource location information, a first query signal or a response signal;
wherein the resource location information is obtained based on at least one of the following methods: protocol predefinition, network device preconfiguration, IoT device predefinition, IoT device calculation, or network device indication based on a second query signal.

33. A signal transmission apparatus, used in a first device, comprising:
a second processing unit, used for transmitting, based on resource location information, a first query signal;
wherein the resource location information is obtained based on at least one of the following methods: protocol predefinition, network device preconfiguration, IoT device predefinition, IoT device calculation, or network device indication based on a second query signal.

34. A processor readable storage medium, wherein the processor readable storage medium stores a computer program that causes a processor to perform the method of any of claims 1 to 14, or the method of any of claims 15 to 19.
